# EUROPEAN PATENT APPLICATION

(11) **EP 3 779 123 A1**
(43) Date of publication of application: **17.02.2021**
(21) Application number: 19775399.9
(22) Date of filing: 20.02.2019
(51) Int. Cl.: F01D 5/28, B22F 5/04, B22F 3/22, F01D 5/14

(54) **BLADE MANUFACTURING METHOD**

(30) Priority: 28.03.2018 JP 2018062544
(71) Applicant: Mitsubishi Heavy Industries Aero Engines, Ltd., Komaki-shi Aichi 485-0826 (JP)
(72) Inventor: SHINDO, Kentaro, Tokyo 100-8332 (JP); SUZUKI, Kenji, Tokyo 100-8332 (JP); SOBU, Shintaro, Tokyo 100-8332 (JP); HANADA, Tadayuki, Komaki-shi, Aichi 485-0826 (JP)
(74) Representative: Studio Torta S.p.A.
(86) International application number: PCT/JP2019/006404
(87) International publication number: WO 2019/187819

(57) **Abstract**

Provided is a blade manufacturing method by which a blade of a stable quality can be manufactured. The present invention involves: a shaping process in which a blade is molded by means of metal injection molding by injecting metal powder toward a mold; a jig attaching process in which a jig serving as a mold, which is divided into at least two parts forming the shape of the blade therebetween, is attached to the blade by sandwiching the blade between the shape-forming surfaces; and a thermal treatment process in which a thermal treatment is applied to the blade to which the jig has been attached.

## Description

### Technical Field

The present invention relates to a blade manufacturing method.

### Background Art

Metal injection molding (hereinafter, referred to as MIM as appropriate) is widely used in manufacturing mechanical components since productivity and dimensional accuracy are high. MIM is a processing method for obtaining a sintered body having a predetermined shape, in which metal and alloy powders and an organic binder are kneaded, a molded body having a desired shape is prepared by injecting the kneaded compound into a mold, and the organic binder is removed and sintered from the molded body.

PTL 1 discloses a method for manufacturing a turbine wheel to which MIM is applied. In the method for manufacturing a turbine wheel disclosed in PTL 1, a turbine wheel having desired sintering density and dimensional accuracy can be manufactured by performing hot isostatic pressing (hereinafter, referred to as HIP treatment as appropriate), machining, and pressing after obtaining a sintered body through MIM.

### Citation List

### Patent Literature

[PTL 1] Japanese Unexamined Patent Application Publication No. 2011-174096

### Summary of Invention

### Technical Problem

Herein, since sintering and HIP treatment in MIM are processes of applying a heat load exceeding 1,000 °C to a product, there is a possibility that the product deforms due to a temperature change. In addition, in a case of manufacturing a member having a small thickness, there is a problem that deformation caused by thermal strain is particularly likely to occur.

The present invention is devised in view of the circumstances, and an object thereof is to provide a blade manufacturing method in which a blade with high dimensional accuracy can be manufactured.

### Solution to Problem

According to an aspect of the present invention, there is provided a blade manufacturing method including a molding step of injecting a metal particle toward a mold and shaping a blade through metal injection molding, a jig attaching step of sandwiching the blade between shape-forming surfaces of a jig which is divided into at least two parts and serves as a mold in which a shape of the blade is formed, and attaching the jig to the blade, and a heat treatment step of performing heat treatment on the blade to which the jig is attached.

In the configuration, a temperature reduction of a thin portion can be prevented as the jig covers the blade, the occurrence of a temperature difference in the blade can be suppressed in a case where heat treatment is performed in the heat treatment step, thermal stress that occurs in the blade can be relaxed, deformation of the blade caused by the thermal stress can be suppressed, and the blade with high dimensional accuracy can be manufactured.

In addition, in the jig attaching step, it is preferable that a pressing unit that presses the jig in a direction sandwiching the blade is attached to the jig in a state where the jig sandwiches the blade. In the heat treatment step, it is preferable that the heat treatment is performed in a state where the pressing unit is attached to the jig.

In the configuration, the jig can be attached to the blade even in a case where the blade has deformed in the molding step, heat treatment can be performed on the blade in a state where a force is applied such that the blade returns to a shape in a design dimension, the blade can be corrected to the design dimension, and the dimensional accuracy of the blade can be increased.

In addition, it is preferable that the metal particle is formed of stainless steel, a Ni-based alloy, a titanium alloy, and a titanium aluminum alloy.

### Advantageous Effects of Invention

In the present invention, the blade with high dimensional accuracy can be manufactured.

### Brief Description of Drawings

Fig. 1 is an outline view illustrating a rotor blade of a turbomachine manufactured through a blade manufacturing method according to the embodiment.
Fig. 2 is an example of a flowchart showing the blade manufacturing method according to the embodiment.
Fig. 3 is a cross-sectional view illustrating a jig and the rotor blade in a jig attaching step of the blade manufacturing method according to the embodiment.
Fig. 4 is a cross-sectional view illustrating the jig and the rotor blade in the jig attaching step of the blade manufacturing method according to the embodiment. Description of Embodiments

Hereinafter, an embodiment according to the present invention will be described in detail with reference to the drawings. The invention is not limited by the embodiment. In addition, components in the following embodiment include components that can be easily replaced by those skilled in the art or components that are substantially the same. Further, the components described below can be combined as appropriate, and in a case where there are a plurality of embodiments, the respective embodiments can also be combined.

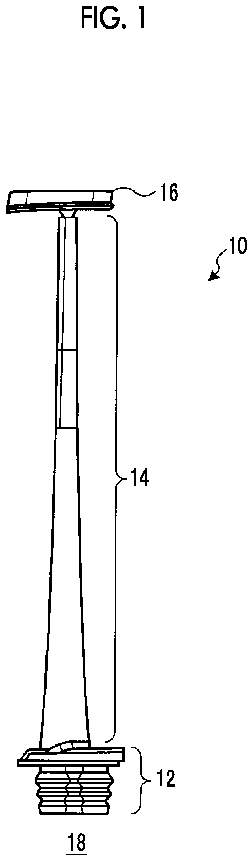

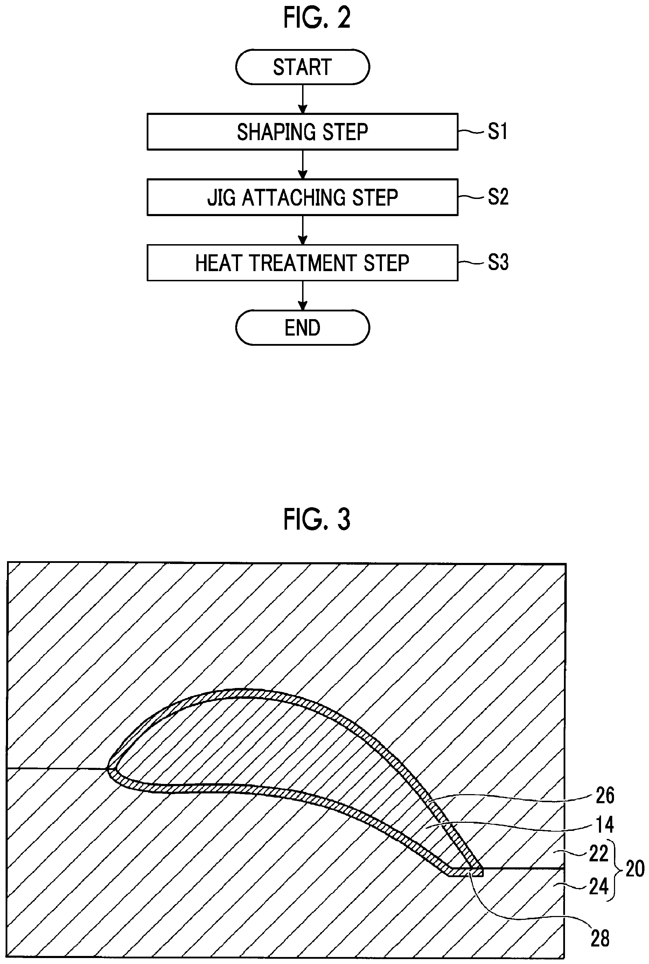

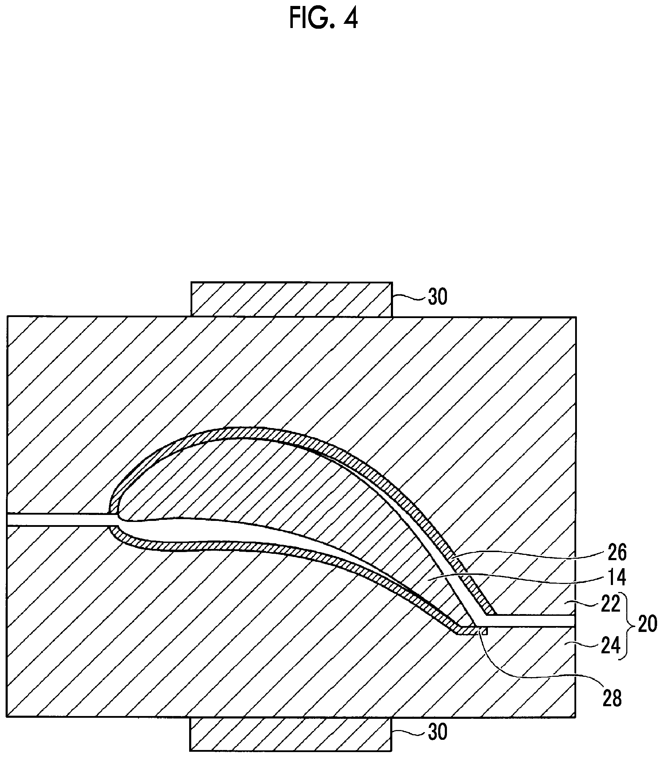

Fig. 1 is an outline view illustrating a rotor blade 10 of a turbomachine manufactured through a blade manufacturing method according to the embodiment. Fig. 2 is an example of a flowchart showing the blade manufacturing method according to the embodiment. Figs. 3 and 4 each are a cross-sectional view illustrating a jig and a rotor blade in a jig attaching step of the blade manufacturing method according to the embodiment.

A blade manufactured through the blade manufacturing method of the embodiment is applied to, for example, the rotor blade 10 of the turbomachine. Although the invention is applied to the rotor blade 10 of the turbomachine in the embodiment, without particularly being limited thereto, the invention may be applied to any other blade. For example, the blade manufacturing method of the embodiment may be applied to a rotor blade or a stator blade of an aeroengine, a rotor blade of an industrial gas turbine, and a rotor blade of a steam turbine. First, prior to the description of a method for manufacturing the rotor blade 10, the rotor blade 10 and a jig 20 used in manufacturing the rotor blade 10 will be described with reference to Figs. 1 and 3.

The rotor blade 10 includes a blade root portion 12, a blade portion 14, and a shroud 16. The rotor blade 10 is a blade fixed to a rotating shaft of the turbomachine via a rotor disk. A material for the rotor blade 10 is a titanium alloy, but is not limited thereto. A material for the rotor blade 10 may be, for example, a nickel alloy.

The blade root portion 12 is formed at an end portion of the rotor blade 10 on a rotating shaft side 18. Herein, the rotating shaft side 18 is a side on which a rotating shaft of the rotor blade 10 is provided. The blade root portion 12 has a shape in which a plurality of uneven portions are formed as illustrated in Fig. 1. The blade root portion 12 is fitted into, for example, an opening which is formed in an outer circumference of the rotor disk and matches shapes of the uneven portions of the blade root portion 12. That is, the blade root portion 12 is fixed to the rotor disk.

The blade portion 14 has one end portion on the rotating shaft side 18 connected to the blade root portion 12 and the other end portion connected to the shroud 16. The blade portion 14 has a thin panel shape.

The shroud 16 is formed at an end portion of the rotor blade 10 in a direction opposite to the rotating shaft side 18. The shroud 16 is a member that is in contact with a shroud of the adjacent rotor blade to fix the rotor blade 10, and suppresses the vibration of the rotor blade 10.

The jig 20 has a back jig 22 and a front jig 24. As illustrated in Fig. 3, the jig 20 is a mold in which a shape of the blade portion 14 having a design dimension is formed therein. The jig 20 can be divided into the back jig 22 and the front jig 24. Although the jig 20 can be divided into the back jig 22 and the front jig 24, the jig is not limited thereto. The jig 20 may be divided into three or more members. Although an outer shape of a section of the jig 20 illustrated in Fig. 3 is a rectangular shape, the outer shape is not limited thereto. The outer shape of the section of the jig 20 may have a polygonal shape, a circular shape, and an elliptical shape.

The back jig 22 is a mold attached to a back surface of the blade portion 14. Herein, the back surface of the blade portion 14 is a suction surface of the blade portion 14. A material for the back jig 22 is alumina ceramics, but is not limited thereto. The back jig 22 may be formed of a material having hardness greater than the rotor blade 10 at least in a temperature range applied in a heat treatment step of the blade manufacturing method. A coating 26 is formed on a surface of the back jig 22, which comes into contact with the rotor blade 10. The coating layer 26 is, for example, a yttria ceramic thermal spraying film, but is not limited thereto. The coating layer 26 may be formed of a material having higher strength than the rotor blade 10 and low reactivity with the rotor blade at least in the temperature range applied in the heat treatment step of the blade manufacturing method.

The front jig 24 is a mold attached to a front surface of the blade portion 14. Herein, the front surface of the blade portion 14 is a surface on a side where the blade portion 14 receives wind. A material for the front jig 24 is a nickel alloy, but is not limited thereto. The front jig 24 may be formed of a material having hardness greater than the rotor blade 10 at least in the temperature range applied in the heat treatment step of the blade manufacturing method. An insulator layer 28 formed on a surface of the front jig 24, which comes into contact with the rotor blade 10. The insulator layer 28 is, for example, a thermal spraying film, but is not limited thereto. The insulator layer 28 may be formed of an insulating material having hardness greater than the rotor blade 10 at least in the temperature range applied in the heat treatment step of the blade manufacturing method.

Herein, it is preferable that the back jig 22 and the front jig 24 are formed of a material having a linear expansion coefficient close to a linear expansion coefficient of a titanium aluminum alloy which is a material used in the rotor blade 10. Herein, "having a linear expansion coefficient close to" means Inconel 903 is used, and values are shown in Table 1. Since molding is possible depending on a product shape even when the linear expansion coefficient is different, a material used in the jig may be a ceramic material or carbon.

**[Table 1]**

| Item | Linear Expansion Coefficient (x 10⁻⁶/°C) | | | | | | | |
|---|---|---|---|---|---|---|---|---|
| Temperature (°C) | 100 | 200 | 300 | 400 | 500 | 600 | 700 | 800 |
| TiAl | 9.1 | 9.7 | 10.3 | 10.7 | 10.9 | 11.1 | - | 11.5 |
| Inconel 903 | 7.9 | 7.7 | 7.7 | 7.6 | 8.3 | 9.4 | 11. 0 | - |

Next, the method for manufacturing the rotor blade 10 will be described with reference to Figs. 2, 3, and 4. As shown in Fig. 2, in the blade manufacturing method according to the embodiment, a molding step S1, a jig attaching step S2, and a heat treatment step S3 are performed in this order.

In the molding step S1, the rotor blade 10 is shaped using MIM. Specifically, metal particles and a binder are sufficiently kneaded to prepare a compound. Herein, the metal particles are, for example, titanium aluminum alloy powder. Herein, the binder is, for example, paraffin wax. Next, with the use of an injection molding machine including a mold, the compound is spurted toward the mold to make a static carrier through injection molding. Next, a molded body is heated to a temperature range where the binder volatilizes to remove the binder from the molded body (hereinafter, removing the binder will be referred to as degreasing as appropriate). Degreasing may be performed by immersing the molded body in a solvent that can dissolve the binder. Next, the molded body is heated at a predetermined sintering temperature to sinter the molded body. Before degreasing the molded body, work of removing linear projection traces (parting lines) generated by injection molding may be performed. Herein, the rotor blade 10 is formed of, for example, a titanium aluminum alloy. The rotor blade 10 may be formed of stainless steel, a Ni-based alloy, and a titanium alloy.

In the jig attaching step S2, the jig 20 is attached to the blade portion 14 of the rotor blade 10 as illustrated in Fig. 3. Specifically, the blade portion 14 is sandwiched between the back jig 22 and the front jig 24, and the jig 20 is attached to the blade portion 14. That is, the periphery of the blade portion 14 is covered with an internal space of the jig 20. The internal space has a shape that follows a design shape of the blade portion 14. Herein, in a case where the blade portion 14 has deformed in the molding step S1 and the shape of the jig 20 and the shape of the blade portion 14 deviate from each other by a predetermined amount or more, the jig 20 is pressed by a pressing unit 30 as illustrated in Fig. 4 after the jig 20 is attached to the blade portion 14. Specifically, the blade portion 14 is sandwiched between the back jig 22 and the front jig 24, the back jig 22 and the front jig 24 are pressed by the pressing unit 30, a force is applied to the jig 20 to press the rotor blade 10 from a front side and a back side, and the jig 20 is attached to the blade portion 14. Herein, the pressing unit 30 is, for example, a clamp and a vise. In a case where the deformation of the blade portion 14 is great as described above, a force is applied to the jig 20 by the pressing unit 30, and thereby the blade portion 14 is housed in the jig 20 as illustrated in Fig. 3.

In the heat treatment step S3, heat treatment is performed on the rotor blade 10 to which the jig 20 is attached. The heat treatment is, for example, HIP treatment. Herein, HIP treatment is heat treatment in which a pressure of 10 MPa to 200 MPa and a heat load exceeding 1,000 °C are applied to an object to be processed under an argon atmosphere. Although heat treatment in the heat treatment step S3 is HIP treatment, the invention is not limited thereto. Heat treatment in the heat treatment step may be vacuum heat treatment, normal pressure heat treatment, atmospheric heat treatment in which heating is performed under an inert gas atmosphere, and hot press heat treatment in which heating is performed in a state of being pressurized from one direction. Herein, heat treatment is performed at a lower temperature than sintering treatment in the molding step S1. Although it is necessary to select heat treatment conditions from various conditions in order to obtain desired mechanical properties, it is preferable to hold the rotor blade at a temperature of 800 °C or more and 1,200 °C or less for 10 hours to 100 hours as typical heat treatment.

In the blade manufacturing method according to the embodiment, the jig 20 which is a mold in which the shape of the blade portion 14 is formed therein is attached to the blade portion 14 in the jig attaching step S2, and heat treatment is performed in the heat treatment step S3. Accordingly, it is possible for the jig 20 to cover the blade portion 14, a difference in a cooling speed depending on a position of the blade portion 14 in the heat treatment step S3 can be decreased as the jig 20 is used, and thus the occurrence of a temperature difference in the blade portion 14 can be suppressed in the heat treatment step S3. Specifically, an outer side of the jig 20 serves as an external space, both of a thick portion and a thin portion of the blade portion 14 radiate heat via the jig 20, and thereby the temperature can be reduced on average. Accordingly, thermal stress generated in the blade portion 14 can be relaxed, and deformation of the blade caused by the thermal stress can be suppressed. As the deformation of the blade can be suppressed and also cooling can be averaged in this manner, the blade with high dimensional accuracy can be manufactured.

In addition, a blade, in particular, a blade with high accuracy can be manufactured in a case of forming the blade of a titanium aluminum alloy which is likely to deform due to a temperature change. By forming the blade of a titanium aluminum alloy, the blade that is lighter in weight and has higher strength than a case where a nickel alloy is applied to a material for the blade can be manufactured.

In addition, in the blade manufacturing method of the embodiment, in a case where the blade portion 14 has deformed in the molding step S1, the blade portion 14 is sandwiched between the back jig 22 and the front jig 24, the back jig 22 and the front jig 24 are pressed by the pressing unit 30, a force is applied to the jig 20 to press the rotor blade 10 from the front side and the back side, and the jig 20 is attached to the blade portion 14, in the jig attaching step S2. Heat treatment is performed on the blade portion 14 to which the jig 20 is attached, in the heat treatment step S3. Accordingly, even in a case where the blade portion 14 has deformed in the molding step S1, heat treatment can be performed on the blade portion 14 in a state where the blade portion 14 has returned to a shape closer to the design dimension, the blade portion 14 can be corrected to the design dimension, and the dimensional accuracy of the blade portion 14 can be increased.

In addition, in the blade manufacturing method of the embodiment, the jig 20, of which the portions that come into contact with the blade portion 14 have the insulator layers 26 and 28 formed, is attached to the blade portion 14 in the jig attaching step S2. Accordingly, it is possible for an insulator to be interposed between the blade portion 14 and the jig 20, the blade portion 14 and the jig 20 can be electrically insulated, galvanic corrosion that occurs between the blade portion 14 and the jig 20 can be prevented, and a blade with higher quality can be manufactured.

In addition, in the blade manufacturing method of the embodiment, the rotor blade 10 is shaped using MIM in the molding step S1. Accordingly, it is possible to manufacture the rotor blade 10 with high dimensional accuracy as compared with manufacturing through casting, productivity can be improved, and manufacturing costs can be reduced.

### Reference Signs List

- 10: rotor blade
- 12: root blade portion
- 14: blade portion
- 16: shroud
- 18: rotating shaft side
- 20: jig
- 22: back jig
- 24: front jig
- 26, 28: insulator layer
- 30: pressing unit

## Claims

1. A blade manufacturing method comprising:
a molding step of injecting a metal particle toward a mold and shaping a blade through metal injection molding;
a jig attaching step of sandwiching the blade between shape-forming surfaces of a jig which is divided into at least two parts and serves as a mold in which a shape of the blade is formed, and attaching the jig to the blade; and
a heat treatment step of performing heat treatment on the blade to which the jig is attached.

2. The blade manufacturing method according to Claim 1,
wherein in the jig attaching step, a pressing unit that presses the jig in a direction sandwiching the blade is attached to the jig in a state where the jig sandwiches the blade, and
in the heat treatment step, the heat treatment is performed in a state where the pressing unit is attached to the jig.

3. The blade manufacturing method according to Claim 1 or 2,
wherein the metal particle is formed of a titanium aluminum alloy.

4. The blade manufacturing method according to any one of Claims 1 to 3,
wherein the jig has an insulator layer formed on a surface that comes into contact with the blade.
